Europäisches Patentamt

European Patent Office

Office européen des brevets

(19)

(11) Publication number: **0 028 476**
**B1**

(12) **EUROPEAN PATENT SPECIFICATION**

(45) Date of publication of patent specification: **05.10.83**

(51) Int. Cl.³: **F 41 H 5/04, B 32 B 3/16**

(21) Application number: **80303687.0**

(22) Date of filing: **17.10.80**

(54) **Protective shields.**

<table>
<tr><td>(30) Priority: <b>31.10.79 GB 7937705</b></td><td>(73) Proprietor: <b>Sacks, Michael</b><br><b>14 Bury Old Road Prestwich</b><br><b>Manchester (GB)</b></td></tr>
<tr><td>(43) Date of publication of application:<br><b>13.05.81 Bulletin 81/19</b></td><td>(72) Inventor: <b>Sacks, Michael</b><br><b>14 Bury Old Road Prestwich</b><br><b>Manchester (GB)</b></td></tr>
<tr><td>(45) Publication of the grant of the patent:<br><b>05.10.83 Bulletin 83/40</b></td><td></td></tr>
<tr><td>(84) Designated Contracting States:<br><b>AT BE CH DE FR IT LI NL SE</b></td><td>(74) Representative: <b>Quest, Barry et al,</b><br><b>M'CAW &amp; CO. 41-51 Royal Exchange Cross Street</b><br><b>Manchester M2 7BD (GB)</b></td></tr>
<tr><td>(56) References cited:<br><b>WO - A - 80/02252</b><br><b>DE - A - 2 642 082</b><br><b>DE - A - 2 759 193</b><br><b>FR - A - 1 441 460</b><br><b>FR - A - 1 581 760</b><br><b>FR - A - 1 604 806</b><br><b>FR - A - 2 431 674</b><br><b>GB - A - 1 151 441</b><br><b>GB - A - 1 556 245</b><br><b>GB - A - 2 003 792</b><br><b>US - A - 3 516 898</b><br><b>US - A - 3 563 836</b></td><td>(56) References cited:<br><b>US - A - 3 683 828</b><br><b>US - A - 3 829 899</b><br><b>US - A - 3 867 239</b><br><b>US - A - 3 873 998</b><br><b>US - A - 4 079 464</b></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Protective shields

This invention relates to a protective shield, particularly although not exclusively a bullet-proof shield.

In my earlier Patent Application No. 1,556,245 there is disclosed a protective shield to be used in front of a person's body to protect such person against injury by a bullet or other missile or moving object, said shield having one or more layers of a closely woven fabric which is made from aramid fibres of high tensile strength and high stretch resistance such as to be capable of resisting penetration by a bullet, and one or more sheets formed from an impact-absorbing plastics material arranged on that side of said fabric which in use faces the person's body.

With this arrangement, effective protection can be afforded against low velocity missiles but it may not be possible to ensure adequate protection in all cases against high velocity missiles, such as high velocity rifle bullets.

An object of the invention is to provide a protective shield suitable for use as a protection against high velocity missiles.

According to the invention therefore there is provided a protective shield to be used in front of a person's body to protect such person against injury by a bullet or other missile, said shield comprising a supported layer of a rigid, brittle material having a high degree of hardness, and a penetration resisting and impact-absorbing backing structure arranged on that side of the said supported layer which in use faces the person's body, characterised in that said supported layer and said backing structure are formed separately and the brittle material is, supported by bonding same to a stiff or semi-stiff sheet comprising one or more layers of a closely woven fabric made from aramid fibre of high tensile strength and high stretch resistance.

With this arrangement, when a high velocity missile strikes the said supported layer, energy can be absorbed as the brittle material shatters and the missile can be broken into fragments due to the hardness of the material. The resulting low velocity missile fragments can then be easily stopped by the backing structure.

Any suitable kind of brittle material may be used although a glass or ceramic material is preferred, particularly a silicon carbide or alumina, or boron carbide ceramic. One suitable material is a self-bonded silicon carbide manufactured and sold under the name Refel by British Nuclear Fuels Limited. This material has a hardness in the range 2500—3500 Kg/mm² and a rupture modulus of about 525 MN/m² (76000 p.s.i.). Also suitable are Sintox alumina ceramics manufactured and sold by Smiths Industries Limited.

Protective shields incorporating ceramic materials are described in U.K. Patent 1,151,441 and U.S. Patents 3,516,898 and 3,683,828. In each case, however, as specifically described, the ceramic material is bonded to a resin impregnated glass fibre backing layer to form a unitary protective structure. British Patent Application 2003792 discloses the use of aramid fibres in a protective shield but, as specifically described, the shield is a unitary structure formed by resin-impregnation and compression of said fibres.

With the present invention, the brittle material may be used in any suitable form but preferably a sheet structure is employed which is made up from individual small plates placed edge-to-edge. Most preferably, hexagonal plates are used. In order to encourage cracking of the material in a predetermined manner on impact, small holes or other points or lines of weakness may be provided therein. In this way it is possible to facilitate cracking into pieces which are neither too small nor too large to effect good fragmentation of the missile.

The sheet to which the brittle material is bonded is preferably formed from the aramid material sold by Du Pont under the trade name Kevlar, which is capable of resisting penetration by a bullet.

The said supported layer may be provided with a front protective layer to protect against inadvertent breakage of the brittle material, for example if the shield is dropped. This protective layer may comprise one or more polycarbonate sheets and/or a foam plastics sheet and/or a polycarbonate or other facing applied direct to the brittle material. Also, the supported layer may be wrapped in a sheet of strong material such as the above-mentioned aramid fabric, in order to prevent undue collapse and disintegration of the supported layer after it has been hit by a missile. The supported layer may be contained within a plastics or fabric bag.

The said backing structure may be in the form of a sheet made from one or more layers of the above-mentioned aramid fabric and this sheet may be backed with one or more polycarbonate sheets and/or one or more sheets of impact-absorbing plastics material. In a particularly preferred embodiment, the said backing structure comprises a shield as described in the aforementioned prior Patent Specification.

The said backing structure and the said supported layer may be formed separately to the extent that they can be used together or individually as required.

Most conveniently, an article of clothing in the form of a vest or jacket or apron is provided and this has two pouches or pockets to receive respectively the backing structure and the supported layer.

The invention will now be described further by way of example only and with reference to the accompanying drawings in which:—

Figures 1 and 2 are front and back portions of an article of clothing for use with one form of a shield according to the invention; and

Figure 3 is an exaggerated sectional representation of the shield.

The article of clothing has front and back shaped portions 1, 2 formed from stitched fabric (such as nylon) which can be held together by engagement of Velcro (Registered Trade Mark) pads to define a vest-shaped garment.

The front portion 1 has shoulder parts 3 provided respectively with two Velcro pads 4, and also two side flaps 5 provided respectively with two tabs 6 thereon. Such tabs 6 overlie the flaps 5 and are fixed to the front portion 1 at the two ends 7 of the tabs which face each other. The tabs 6 have Velcro pads 8 on the undersides of the free ends thereof.

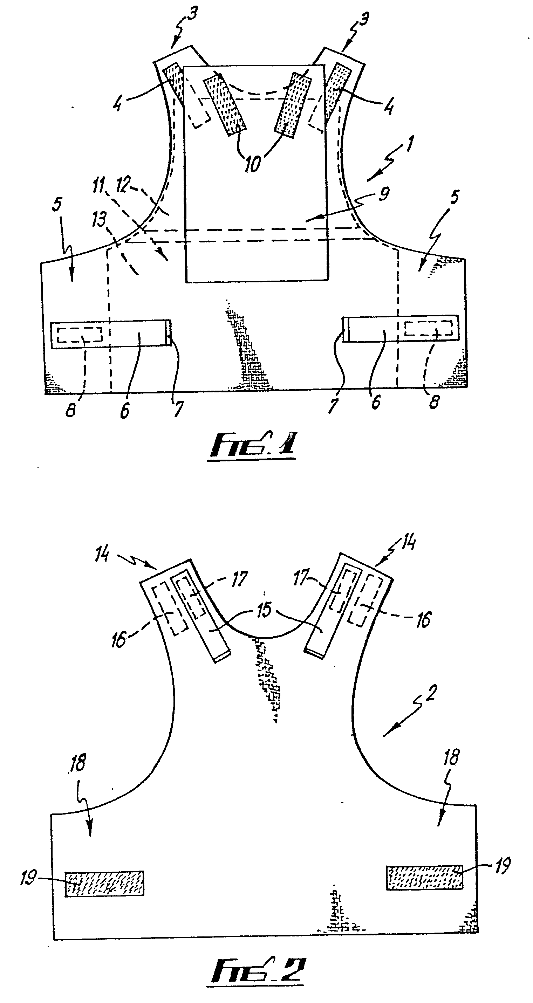

The front portion 1 also has an open-topped pouch 9 overlying the breast region and stitched in position at its bottom edge. Velcro pads 10 are provided at the top of the pouch. A pocket 11 (as shown in dotted lines in Figure 1) is provided on the inside of the front portion, such pocket being defined by overlapping inner sheets 12, 13 of fabric which are stitched to the front portion 1 around the edges thereof and which define a pocket opening between the central overlapping free edges thereof.

The back portion 2 has shoulder strips 14 with overlying tabs 15 fixed in position at their lower ends only. Velcro pads 16, 17 are provided on the undersides of the strips 14 and the tabs 15. There are also side flaps 18 with Velcro pads 19 thereon.

In use, the front and back portions 1, 2 are positioned in front of and behind a person with the side flaps 18 of the back portion 2 overlying the side flaps 5 of the front portion 1, the shoulder strips 14 overlying the shoulder parts 3, the tabs 15 overlying the pouch 9, and the tabs 6 overlying the flaps 18. The superimposed Velcro pads 14 and 16, 10 and 17, 8 and 19, are engaged with each other to hold the portions 1, 2 together.

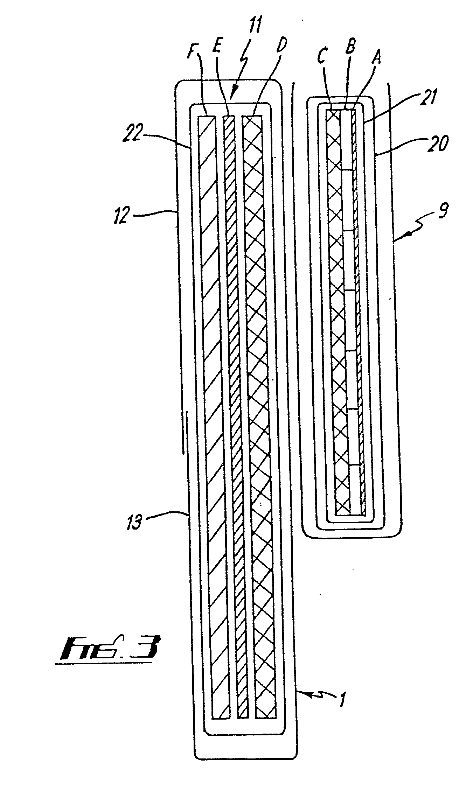

Before fitting the front and back portions 1, 2 a protective shield is incorporated therein, such shield, as shown in Figure 3, having front and back parts which are inserted respectively within the pouch 9 and the pocket 11.

The front part comprises a peripherally sealed nylon bag 20 containing rectangular layers from front to back:

A) One or more thin flexible sheets of the transparent polycarbonate sold under the trade name Lexan the or each such sheet being of 0.75 mm thickness.

B) A layer of hexagonal ceramic plates (say about 7 mm thick and about (75 mm across) formed for example from Refel (as hereinbefore described). The plates are placed edge-to-edge and are bonded to the next described layer C. the first described layer A may also be bonded to the plates. As a bonding agent a thick silicone rubber, such as Berger Silicone 381 may be used.

C) One or more sheets (say 10 sheets) of a coarse Kevlar fabric. The sheets may be bonded together (with the above described bonding agent) to give a stiff laminate.

Within the bag 20, a sheet of Kevlar 21 is wrapped around the layers A, B, C.

The rear part of the shield comprises a peripherally sealed nylon bag 22 (shaped to conform to the pocket) containing layers (some or all of which are shaped similarly to the bag) from front to back.

D) A number of sheets of fabric woven from Kevlar (say Kevlar 29 to 49 woven with 31—31 (warp and weft) picks per inch (2.54 cm) from 1000 or 1500 denier yarn) such sheets being stitched together in a bundle and/or bonded together in pairs. Fifteen to 30 sheets in all may be used.

E) One or more sheets of Lexan as described above.

F) One or more resiliently compressible sheets of a foamed plastics material particularly a closed cell cross-linked polyethylene foam such as that sold under the trade name Plastazote or Evazote, the total thickness of the plastics sheet or sheets being 0.5 mm to 12 mm.

With this arrangement, when a high velocity bullet strikes the protective shield, the bullet hits the ceramic plates B causing these to shatter and the bullet to fragment. Small pieces of the bullet, now moving at a much reduced velocity may penetrate the front part of the shield but are stopped by the back part. The Kevlar sheets D in the back of the shield act to prevent or limit penetration whilst the polycarbonate and foamed plastics sheets E, F absorb impact shock and limit transmission thereof to the person's body. The layer A protects the plates B against breakage, for example if the shield is accidentally dropped or roughly handled. The sheet 21 holds the plates B together after impact so that some protection can be afforded against a subsequent impact.

It is of course to be understood that the invention is not intended to be restricted to the details of the above embodiment and thus, for example, it will be appreciated that parameters such as the thickness of the various layers, the number of individual sheets in the layers, and so on will be selected in accordance with requirements.

Further, the shield is not limited to the shape and mode of utilisation thereof as shown in the drawings but may be suitably shaped and adapted for location relative to a person's body as required. For example, the front portion may have a lower depending pouch into which a separate groin protecting shield, formed in like manner to the back part of the shield 1, can be inserted.

Since the front part of the shield is separate from the back part, the front part may be removed leaving only the back part in the case where protection against high velocity impact is not required.

Instead of separate ceramic plates it is possible to use a single large plate which if desired may be curved or otherwise shaped.

Additionally or alternatively to the use of ceramic plates as the brittle material it is possible to use a one-piece sheet or a sheet formed from edge-to-edge plates made of a metal such as steel or other material which has the properties of a rigid, brittle material as considered in relation to the impact of a bullet therewith.

The tabs 15 used to secure the upper part of the front pouch 9 to the front part 1 of the vest may be of sufficient length and/or may be formed from an elastic material such as to permit a degree of movement of the pouch 9 relative to the vest part 1 behind same. In this way movement of the wearer and in particular normal breathing movements of the wearer's chest need not be unduly restricted despite the weight and rigidity of the layers within the pouch 9.

## Claims

1. A protective shield to be used in front of a person's body to protect such person against injury by a bullet or other missile, said shield comprising a supported layer of a rigid, brittle material (B) having a high degree of hardness, and a penetration resisting and impact-absorbing backing structure arranged on that side of the said supported layer which in use faces the person's body, characterised in that said supported layer and said backing structure are formed separately and the brittle material (B) is supported by bonding same to a stiff or semi-stiff sheet (C) comprising one or more layers of a closely woven fabric made from aramid fibre of high tensile strength and high stretch resistance.

2. A shield according to claim 1, characterised in that the brittle material (B) comprises a glass or ceramic material such as silicon carbide or alumina or boron carbide ceramic.

3. A shield according to claim 1 or 2, characterised in that the brittle material (B) is in the form of a sheet made up of individual small plates placed edge-to-edge.

4. A shield according to any one of claims 1 to 3, characterised in that small holes or other points or lines of weakness are provided in the brittle material (B).

5. A shield according to any one of claims 1 to 4, characterised in that said supported layer is provided with a front protective layer (A) in the form of one or more plastics sheets.

6. A shield according to any one of claims 1 to 5, characterised in that the said supported layer is wrapped in a sheet of strong material (21).

7. A shield according to any one of claims 1 to 6, characterised in that the said supported layer is contained within a bag (20).

8. A shield according to any one of claims 1 to 7, characterised in that the said backing structure comprises: a sheet (D) made from one or more layers of a closely woven fabric which is made from aramid fibres of high tensile strength and high stretch resistance such as to be capable of resisting penetration by a bullet, and behind said fabric sheet (D) one or more sheets (E) formed from an impact-absorbing polycarbonate plastics material.

9. A shield according to any one of claims 1 to 8, characterised in that the supported layer can be removed to permit use of the backing structure alone.

10. A shield according to any one of claims 1 to 9, which is an article of clothing in the form of a vest or jacket or apron characterised in that two pouches (9, 11) or pockets are provided in the article of clothing to receive respectively the backing structure and the supported layer.

## Patentansprüche

1. Schutzschild zum Tragen vor dem Körper als Schutz gegen Verletzungen durch Kugeln oder andere Gschosse, mit einer abgestützten Lage aus starrem und sprödem Material (B) hoher Härte und einer durchschlagfesten und stoßabsorbierenden Stützlage auf der im Gebrauch zum Körper hin liegenden Seite der abgestützten Lage, dadurch gekennzeichnet, daß die abgestützte Lage und die Stützlage separate Teile sind und das spröde Material (B) durch Verbinden mit einem steifen oder halbsteifen Flachkörper (C) abgestützt ist, der aus einer oder mehreren Lagen eines dichtgeschlagenen Gewebes aus Aramidfaser hoher Zugfestigkeit und guter Reckfestigkeit besteht.

2. Schutzschild nach Anspruch 1, dadurch gekennzeichnet, daß das spröde Material (B) einen Glas- oder Keramikwerkstoff wie Siliziumkarbid-, Aluminiumoxid- oder Borkarbid-Keramikwerkstoff enthält.

3. Schutzschild nach Anspruch 1 oder 2, dadurch gekennzeichnet, daß das spröde Material (B) aus einem Flachkörper aus einzelnen, mit ihren Kanten aneinandergelegten Plättchen besteht.

4. Schutzschild nach einem der Ansprüche 1 bis 3, dadurch gekennzeichnet, daß kleine Löcher oder andere punkt- oder linienförmige Schwachstellen in dem spröden Material (B) vorhanden sind.

5. Schutzschild nach einem der Ansprüche 1 bis 4, dadurch gekennzeichnet, daß die abgestützte Lage eine vordere Schutzlage (A) aus einer oder mehreren Kunststoffolien aufweist.

6. Schutzschild nach einem der Ansprüche 1 bis 5, dadurch gekennzeichnet, daß die abgestützte Lage in eine Folie aus festem Material (21) eingeschlagen ist.

7. Schutzschild nach einem der Ansprüche 1 bis 6, dadurch gekennzeichnet, daß sich die abgestützte Lage in einer Hülle (20) befindet.

8. Schutzschild nach einem der Ansprüche 1 bis 7, dadurch gekennzeichnet, daß die Stützlage umfasst: einen gegen Geschosse durchschlagfesten Flachkörper (D) aus einer oder mehreren Lagen eines dichtgeschlagenen Gewebes aus Aramidfasern hoher Zugfestigkeit und guter Reckfestigkeit und eine oder mehrere, hinter dem Gewebeflachkörper (D) angeordnete Folien (E) aus einem stoßabsorbierenden Polykarbonat-Kunststoff.

9. Schutzschild nach einem der Ansprüche 1 bis 8, dadurch gekennzeichnet, daß die abgestüzte Lage abnehmbar ist, so daß die Stützlage für sich allein zu verwenden ist.

10. Schutzschild nach einem der Ansprüche 1 bis 9, der als Kleidungsstück in Form einer Weste, Jacke oder Schürze ausgebildet ist, dadurch gekennzeichnet, daß das Kleidungsstück zwei Beutel (9, 11) oder Taschen zum Aufnehmen der Stützlage bzw. der abgestützten Lage enthält.

**Revendications**

1. Bouclier protecteur destiné à être utilisé sur l'avant du corps d'une personne pour protéger celle-ci contre une blessure par une balle ou un autre projectile, ce gilet comprenant une couche d'un matériau (B) cassant et rigide ayant un haut degré de dureté, et une structure de renforcement absorbant les chocs et résistant à la pénétration agencée sur le côté de ladite couche qui fait face lors de l'utilisation au corps de la personne, caractérisé en ce que ladite couche et ladite structure de renforcement sont formées séparément et en ce que le matériau cassant (B) est supporté par une liaison de celui-ci avec une feuille (C) semi-rigide ou rigide comprenant une ou plusieurs couches d'un tissu à texture serrée constituées à partir de fibres d'aramide de haute résistance à la tension et de haute résistance à l'allongement.

2. Bouclier selon la revendication 1, caractérisé en ce que le matériau cassant (B) comprend du verre ou de la céramique tel que du carbure de silicium ou de l'alumine ou une céramique de carbure de bore.

3. Bouclier selon l'une des revendications 1 et 2, caractérisé en ce que le matériau cassant (B) est réalisé sous la forme d'une feuille constituée de petites plaques distinctes placées côte-à-côte.

4. Bouclier selon l'une des revendications 1 à 3, caractérisé en ce que des petits trous ou d'autres points ou des lignes d'affaiblissement sont prévus dans le matériau cassant (B).

5. Bouclier selon l'une des revendications 1 à 4, caractérisé en ce que la couche précitée est munie d'une couche de protection frontale (A) se présentant sous la forme d'une ou plusieurs feuilles en matière plastique.

6. Bouclier selon l'une des revendications 1 à 5, caractérisé en ce que la couche précitée est enveloppée dans une feuille de matière résistante (21).

7. Bouclier selon l'une des revendications 1 à 6, caractérisé en ce que la couche précitée est contenue dans un sac (20).

8. Bouclier selon l'une des revendications 1 à 7, caractérisé en ce que la structure de renforcement comprend: une feuille (D) constituée d'une ou plusieurs couches d'un tissue à texture serrée réalisé à partir de fibres d'aramide de haute résistance à la tension et de haute résistance à l'allongement de façon à pouvoir résister à la pénétration par une balle, et derrière cette feuille de tissu (D) sont formées une ou plusieurs feuilles (E) à partir d'un matériau plastique polycarbonate absorbant les chocs.

9. Bouclier selon l'une des revendications 1 à 8, caractérisé en ce que la couche précitée peut être enlevée pour permettre l'utilisation de la structure de renforcement seule.

10. Bouclier selon l'une des revendications 1 à 9, constituant un article de vêtement sous la forme d'un gilet ou d'une veste ou d'un tablier, caractérisé en ce que deux bourses ou poches (9, 11) sont prévues dans l'article de vêtement pour recevoir respectivement la structure de renforcement et la couche précitée.

FIG. 1

FIG. 2

FIG. 3